# EUROPEAN PATENT APPLICATION

(11) **EP 4 245 627 A1**
(43) Date of publication of application: **20.09.2023**
(21) Application number: 22205246.6
(22) Date of filing: 03.11.2022
(51) Int. Cl.: B60W 50/00

(54) **VEHICLE CONTROL METHOD, VEHICLE CONTROL SYSTEM, AND MAP MANAGEMENT METHOD**

(30) Priority: 14.01.2022 JP 2022004334
(71) Applicant: TOYOTA JIDOSHA KABUSHIKI KAISHA, Aichi-Ken 471-8571 (JP)
(72) Inventor: KAMOGARI, Yuzuru, Toyota-shi,, 471-8571 (JP)
(74) Representative: J A Kemp LLP

(57) **Abstract**

A vehicle control method includes: controlling a vehicle (1) based on a lane position obtained from map information; detecting a lane boundary around the vehicle (1) using a sensor (20) mounted on the vehicle (1); and determining that the map information deviates from an actual state when a predetermined condition is met. The predetermined condition is met when a state in which a first distance is equal to or less than a first threshold continues for a first time or more or when a state in which a second distance is equal to or more than a second threshold continues for a second time or more. The first distance is a distance between a travel position of the vehicle (1) and the detected lane boundary. The second distance is a distance between a lane boundary obtained from the map information and the detected lane boundary.

## Description

### BACKGROUND OF THE INVENTION

### 1. Field of the Invention

The present disclosure relates to a vehicle control method based on map information, a vehicle control system, and a map management method.

### 2. Description of Related Art

WO 2018/189843 discloses a vehicle driving control method. Map information includes a first map that includes identification information on a travel lane and a second map that does not include identification information on the travel lane. First driving control is performed when a vehicle travels along a first path that belongs to the first map, among paths from the present position of the vehicle to a destination. On the other hand, second driving control at a lower autonomous driving level than the first driving control is performed when the vehicle travels along a second path that belongs to the second map, among the paths.

Other techniques associated with vehicle control are disclosed in Japanese Unexamined Patent Application Publication No. 2019-156196 (JP 2019-156196 A) and WO 2017/199575.

### SUMMARY OF THE INVENTION

Vehicle control is occasionally performed based on a lane position obtained from map information. In this case, there is a possibility that the actual lane boundary (such as a white line) deviates from a lane boundary obtained from the map information because of replacement of the white line, road works, etc. In other words, there is a possibility that the map information deviates from the actual state. When the map information deviates from the actual state, the precision in vehicle control based on the map information is lowered.

The present disclosure provides a technique that allows appropriately detecting that map information to be used for vehicle control has deviated from the actual state.

A first aspect of the present application provides a vehicle control method including: controlling a vehicle based on a lane position obtained from map information; detecting a lane boundary around the vehicle using a sensor mounted on the vehicle; and determining that the map information deviates from an actual state when a predetermined condition is met. The predetermined condition is met when a state in which a first distance is equal to or less than a first threshold continues for a first time or more or when a state in which a second distance is equal to or more than a second threshold continues for a second time or more. The first distance is a distance between a travel position of the vehicle and the detected lane boundary. The second distance is a distance between a lane boundary obtained from the map information at the travel position of the vehicle and the detected lane boundary.

In the vehicle control method according to the first aspect of the present application, the controlling the vehicle may include determining a target trajectory for the vehicle based on the lane position obtained from the map information, and controlling the vehicle so as to follow the target trajectory. The travel position of the vehicle may be a position on the target trajectory or a present position of the vehicle.

In the vehicle control method according to the first aspect of the present application, the travel position of the vehicle may be the position on the target trajectory.

In the vehicle control method according to the first aspect of the present application, the determining the target trajectory based on the lane position obtained from the map information may include determining the target trajectory so as to extend along a lane center or such that a margin from the lane boundary obtained from the map information exceeds the first threshold.

The vehicle control method according to the first aspect of the present application may further include issuing a transition demand to demand takeover of driving to a driver of the vehicle when it is determined that the map information deviates from the actual state during autonomous driving control.

The vehicle control method according to the first aspect of the present application may further include transmitting a notification that indicates at least a first section to a map management device that manages the map information when it is determined that the map information for the first section deviates from the actual state.

In the vehicle control method according to the first aspect of the present application, the notification may include a position of the detected lane boundary in the first section.

A second aspect of the present application provides a vehicle control system that controls a vehicle, including one or more processors. The one or more processors are configured to: control the vehicle based on a lane position obtained from map information; detect a lane boundary around the vehicle using a sensor mounted on the vehicle; and determine that the map information deviates from an actual state when a predetermined condition is met. The predetermined condition is met when a state in which a first distance is equal to or less than a first threshold continues for a first time or more or when a state in which a second distance is equal to or more than a second threshold continues for a second time or more. The first distance is a distance between a travel position of the vehicle and the detected lane boundary. The second distance is a distance between a lane boundary obtained from the map information at the travel position of the vehicle and the detected lane boundary.

A third aspect of the present application provides a map management method of managing map information that indicates a lane position to be used to control a vehicle. The map management method includes: detecting a lane boundary around the vehicle using a sensor mounted on the vehicle; and determining that the map information deviates from an actual state when a predetermined condition is met. The predetermined condition is met when a state in which a first distance is equal to or less than a first threshold continues for a first time or more or when a state in which a second distance is equal to or more than a second threshold continues for a second time or more. The first distance is a distance between a travel position of the vehicle and the detected lane boundary. The second distance is a distance between a lane boundary obtained from the map information at the travel position of the vehicle and the detected lane boundary.

With the present disclosure, the vehicle is controlled based on the lane position obtained from the map information. In addition, the actual lane boundary around the vehicle is detected using a sensor mounted on the vehicle. Further, it is determined that the map information has deviated from the actual state when a predetermined condition is met. The predetermined condition is met when "a state in which the distance between the travel position of the vehicle and the actual lane boundary is equal to or less than a first threshold continues for a first time or more". Alternatively, the predetermined condition is met when "a state in which the distance between the lane boundary obtained from the map information at the travel position of the vehicle and the actual lane boundary is equal to or more than a second threshold continues for a second time or more". Consequently, it is possible to appropriately detect that the map information has deviated from the actual state without being affected by temporary behavior of the vehicle.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a conceptual diagram illustrating an overview of a vehicle control system according to a first embodiment;
FIG. 2 is a conceptual diagram illustrating detection of deviation of map information from the actual state according to the first embodiment;
FIG. 3 is a timing chart illustrating an example of the detection of deviation of map information from the actual state according to the first embodiment;
FIG. 4 is a block diagram illustrating an example of the configuration of the vehicle control system according to the first embodiment;
FIG. 5 is a block diagram illustrating an example of driving environment information according to the first embodiment;
FIG. 6 is a flowchart illustrating an example of a process by the vehicle control system according to the first embodiment;
FIG. 7 is a conceptual diagram illustrating detection of deviation of map information from the actual state according to a second embodiment;
FIG. 8 is a timing chart illustrating an example of the detection of deviation of map information from the actual state according to the second embodiment; and
FIG. 9 is a flowchart illustrating an example of a process by the vehicle control system according to the second embodiment.

### DETAILED DESCRIPTION OF EMBODIMENTS

An embodiment of the present disclosure will be described with reference to the accompanying drawings.

### 1. First Embodiment

### 1-1. Overview of Vehicle Control System

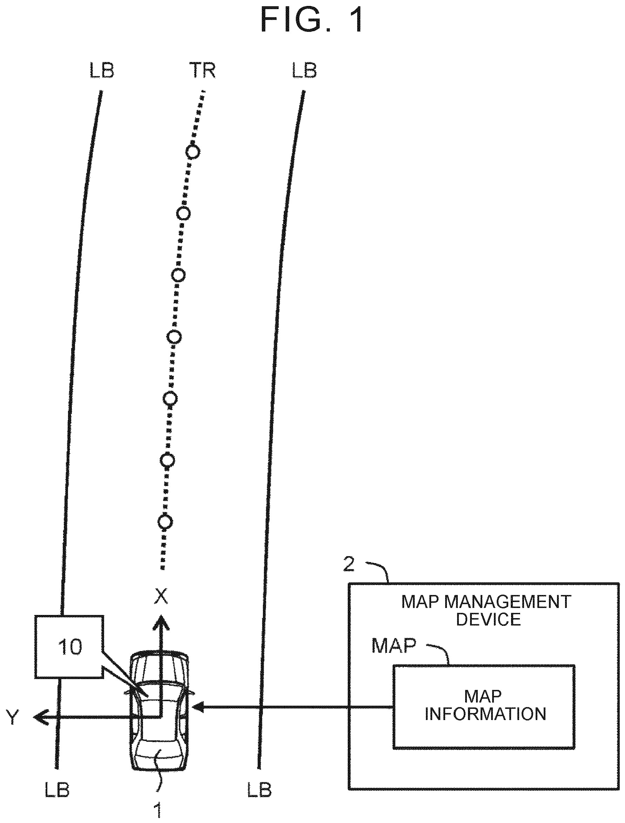

FIG. 1 is a conceptual diagram illustrating an overview of a vehicle control system 10 according to a first embodiment. The vehicle control system 10 controls a vehicle 1. The vehicle control system 10 is typically mounted on the vehicle 1. Alternatively, at least a part of the vehicle control system 10 may be disposed in an external device that is external to the vehicle 1 to remotely control the vehicle 1. That is, the vehicle control system 10 may be disposed in a distributed manner in the vehicle 1 and the external device.

The vehicle control system 10 according to the present embodiment controls the vehicle 1 based on map information MAP. More particularly, lane positions (lane arrangement) are registered in the map information MAP. For example, the positions of lane boundaries LB are registered in the map information MAP. For example, the lane boundaries LB are white lines. In a different example, the lane boundaries LB may be three-dimensional obstacles such as curbs, guardrails, and walls. A region interposed between the right and left lane boundaries LB is the lane in which the vehicle 1 travels. The vehicle control system 10 controls the vehicle 1 based on the lane position obtained from the map information MAP.

For example, the vehicle control system 10 determines (generates) a target trajectory TR for the vehicle 1 based on the lane position obtained from the map information MAP. The target trajectory TR includes a target position and a target speed. For example, the target trajectory TR (target position) is determined so as to extend along the center (hereinafter referred to as a "lane center") of the lane in which the vehicle 1 is traveling. Then, the vehicle control system 10 controls travel of the vehicle 1 such that the vehicle 1 follows the target trajectory TR.

The vehicle travel control based on the target trajectory TR may be driving assist control such as autonomous driving control and lane tracing assist (LTA) control. For example, the vehicle control system 10 executes autonomous driving control. In the autonomous driving assumed herein, a driver is not necessarily required to fully focus on driving (e.g. autonomous driving at so-called Level 3 or higher). The vehicle 1 may be an autonomous driving vehicle at Level 4 or higher. The vehicle 1 may be a driverless autonomous driving vehicle.

The map management device 2 manages map information MAP to be used for vehicle control. Management of the map information MAP includes distributing the map information MAP to each vehicle 1, updating the map information MAP, etc.

For example, the map management device 2 is a management server on the cloud. The management server may be constituted from a plurality of servers that perform distributed processing. The vehicle control system 10 communicates with the map management device 2. The vehicle control system 10 acquires necessary map information MAP from the map management device 2.

In a different example, the vehicle control system 10 may include the map management device 2. In this case, the vehicle control system 10 manages the map information MAP, and updates the map information MAP as necessary.

### 1-2. Detection of Deviation of Map Information from Actual State

There is a possibility that the actual lane boundary LB deviates from a lane boundary LB obtained from the map information MAP because of replacement of the white line, road works, etc. In other words, there is a possibility that the map information MAP deviates from the actual state. When the map information MAP deviates from the actual state, the precision in vehicle control based on the map information MAP is lowered. Thus, the present embodiment provides a technique that allows appropriately detecting that the map information MAP to be used for vehicle control has deviated from the actual state.

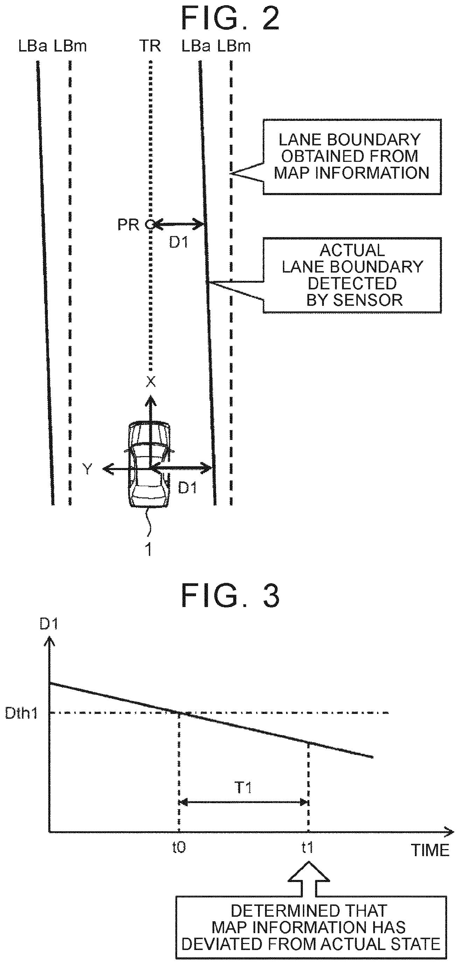

FIG. 2 is a conceptual diagram illustrating detection of deviation of the map information MAP from the actual state. The lane boundary LB obtained from the map information MAP will hereinafter be referred to as a "lane boundary LBm". On the other hand, the actual lane boundary LB will hereinafter be referred to as an "actual lane boundary LBa". The actual lane boundary LBa can be detected using a recognition sensor such as a camera mounted on the vehicle 1.

A first distance D1 is the distance (margin) between the "travel position of the vehicle 1" and the "actual lane boundary LBa detected by the recognition sensor".

For example, the travel position of the vehicle 1 is the present position of the vehicle 1. In this case, the first distance D1 is the distance between the present position of the vehicle 1 and the actual lane boundary LBa. The distance here is a lateral distance along a lateral direction Y that is orthogonal to a forward direction X of the vehicle 1.

In a different example, the travel position of the vehicle 1 may be a position on the target trajectory TR ahead of the vehicle 1. That is, the travel position of the vehicle 1 may be a future position of the vehicle 1. In this case, the first distance D1 is the distance between the target trajectory TR and the actual lane boundary LBa. By way of example, a position PR on the target trajectory TR a certain distance ahead of the vehicle 1 is considered. The first distance D1 is the distance between the position PR on the target trajectory TR and the actual lane boundary LBa. The distance here is a lateral distance along the lateral direction that is orthogonal to the direction of extension of the target trajectory TR or the actual lane boundary LBa.

The vehicle control system 10 compares the first distance D1 with a first threshold Dth1, and determines whether the first distance D1 is equal to or less than the first threshold Dth1. Further, the vehicle control system 10 determines whether a state in which the first distance D1 is equal to or less than the first threshold Dth1 has continued for a first time T1 or more. When the state in which the first distance D1 is equal to or less than the first threshold Dth1 has continued for the first time T1 or more, the vehicle control system 10 determines that the map information MAP has deviated from the actual state. That is, the vehicle control system 10 detects deviation of the map information MAP from the actual state.

FIG. 3 is a timing chart illustrating an example of the detection of deviation of the map information MAP from the actual state. The horizontal axis represents the time. The vertical axis represents the first distance D1. The first distance D1 is decreased as the time passes. At or after time t0, the first distance D1 is equal to or less than the first threshold Dth1 (e.g. 25 cm). At and after time t0, a state in which the first distance D1 is equal to or less than the first threshold Dth1 continues. At time t1, which is the first time T1 (e.g. 5 seconds) after time t0, the vehicle control system 10 determines that the map information MAP has deviated from the actual state. That is, the vehicle control system 10 detects deviation of the map information MAP from the actual state.

It is determined whether the state in which the first distance D1 is equal to or less than the first threshold Dth1 has continued for the first time T1 or more for the following reason. There is a possibility that the vehicle control system 10 controls the vehicle 1 so as to temporarily approach the lane boundary LB in order to avoid an obstacle. In a different example, there is a possibility that the driver temporarily intervenes in the driving operation to steer the vehicle 1 so as to approach the lane boundary LB during autonomous driving control. Such temporary approach to the lane boundary LB has nothing to do with the deviation of the map information MAP from the actual state discussed above. That is, there is a possibility that the vehicle 1 temporarily approaches the lane boundary LB even if the map information MAP has not deviated from the actual state. Hence, it may be erroneously determined that the map information MAP has deviated from the actual state if the "first distance D1 becoming equal to or less than the first threshold Dth1" is used as a determination condition. In order to suppress such an erroneous determination, the "state in which the first distance D1 is equal to or less than the first threshold Dth1 continuing for the first time T1 or more" is used as a determination condition. Consequently, it is possible to appropriately detect that the map information MAP has deviated from the actual state.

With the present embodiment, as has been described above, it is possible to detect that the map information MAP to be used for vehicle control has deviated from the actual state. In particular, it is possible to appropriately detect that the map information MAP has deviated from the actual state without being affected by temporary behavior of the vehicle 1.

In addition, it is possible to "predict" deviation of the map information MAP when the distance between the target trajectory TR and the actual lane boundary LBa is used as the first distance D1. This is preferable from the viewpoint of securing the safety of vehicle travel.

### 1-3. Example of Vehicle Control System

### 1-3-1. Configuration Example

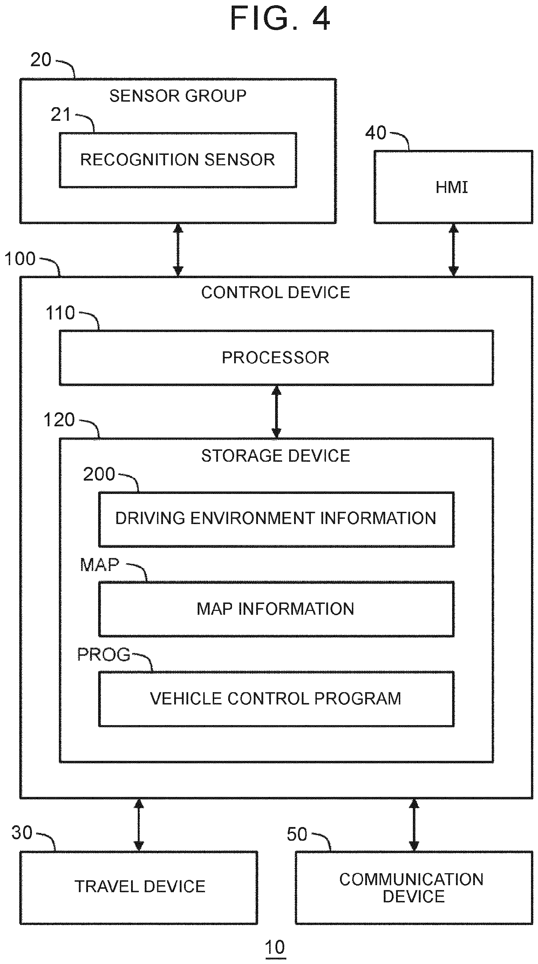

FIG. 4 is a block diagram illustrating an example of the configuration of the vehicle control system 10 according to the present embodiment. The vehicle control system 10 includes a sensor group 20, a travel device 30, a human machine interface (HMI) 40, a communication device 50, and a control device 100.

The sensor group 20 is mounted on the vehicle 1. The sensor group 20 includes a recognition sensor 21 that recognizes (detects) the situation around the vehicle 1. Examples of the recognition sensor 21 include a camera, a laser imaging detection and ranging (LIDAR) sensor, and a radar.

The sensor group 20 also includes a vehicle state sensor (not illustrated) that detects the state of the vehicle 1. The vehicle state sensor includes a speed sensor, an acceleration sensor, a yaw rate sensor, a steering angle sensor, etc. The sensor group 20 further includes a position sensor that detects the position and the direction of the vehicle 1. Examples of the position sensor include a global positioning system (GPS) sensor.

The travel device 30 includes a steering device, a drive device, and a braking device. The steering device steers wheels. Examples of the steering device include an electric power steering (EPS) device. The drive device is a power source that generates a drive force. Examples of the drive device include an engine, an electric motor, and an in-wheel motor. The braking device generates a braking force.

The HMI 40 provides information to a driver of the vehicle 1. The HMI 40 is an interface that receives information from the driver.

The communication device 50 communicates with the outside of the vehicle 1. For example, the communication device 50 communicates with the map management device 2.

The control device 100 controls the vehicle 1. The control device 100 includes one or more processors 110 (hereinafter simply referred to as a "processor 110") and one or more storage devices 120 (hereinafter simply referred to as a "storage device 120"). The processor 110 executes various processes. For example, the processor 110 includes a central processing unit (CPU). The storage device 120 stores various information. Examples of the storage device 120 include a volatile memory, a non-volatile memory, a hard disk drive (HDD), and a solid state drive (SSD). The control device 100 may include one or more electronic control units (ECUs). A part of the control device 100 may be implemented by an information processing device that is external to the vehicle 1. In that case, the part of the control device 100 communicates with the vehicle 1 to remotely control the vehicle 1.

A vehicle control program PROG is a computer program for controlling the vehicle 1. Various processes by the control device 100 are implemented by the processor 110 executing the vehicle control program PROG. The vehicle control program PROG is stored in the storage device 120. Alternatively, the vehicle control program PROG may be stored in a computer-readable storage medium.

### 1-3-2. Information Acquisition Process

The map information MAP includes a common navigation map. In addition, the map information MAP indicates lane positions (lane arrangement). For example, the map information MAP indicates the positions of the lane boundaries LB. The map information MAP may include position information on landmarks, traffic signals, traffic signs, etc.

The control device 100 acquires map information MAP for a necessary area from a map database. The map database may be stored in the storage device 120, or may be stored in the map management device 2 (see FIG. 1) that is external to the vehicle 1. When the map database is stored in the map management device 2 that is external to the vehicle 1, the control device 100 communicates with the map management device 2 via the communication device 50 to acquire necessary map information MAP. The map information MAP is stored in the storage device 120.

The control device 100 also acquires driving environment information 200 that indicates the driving environment of the vehicle 1 using the sensor group 20. The driving environment information 200 is stored in the storage device 120.

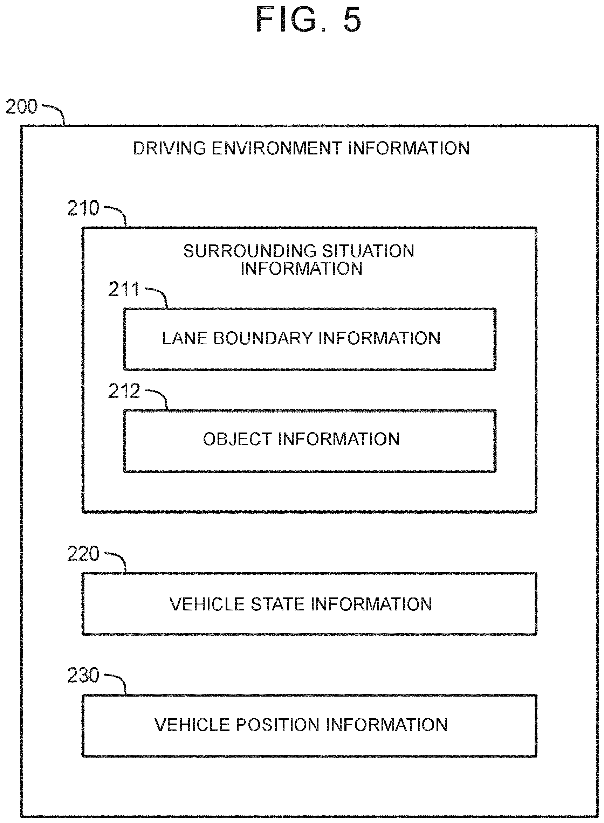

FIG. 5 is a block diagram illustrating an example of the driving environment information 200. The driving environment information 200 includes surrounding situation information 210, vehicle state information 220, and vehicle position information 230.

The surrounding situation information 210 is information that indicates the situation around the vehicle 1. The control device 100 recognizes the situation around the vehicle 1 using the recognition sensor 21, and acquires the surrounding situation information 210. For example, the surrounding situation information 210 includes image information captured by the camera. In a different example, the surrounding situation information 210 includes point group information obtained by the LIDAR sensor.

The surrounding situation information 210 further includes lane boundary information 211 about the lane boundary LB (actual lane boundary LBa) around the vehicle 1. For example, the lane boundaries LB are white lines. In a different example, the lane boundaries LB may be three-dimensional obstacles such as curbs, guardrails, and walls. The lane boundary information 211 indicates at least the position of the lane boundary LB relative to the vehicle 1. For example, the lane boundary LB can be identified and the relative position of the lane boundary LB can be calculated by analyzing image information obtained by the camera. Examples of the image analysis method include semantic segmentation and edge detection.

The surrounding situation information 210 further includes object information 212 about an object around the vehicle 1. Examples of the object include pedestrians, bicycles, motorcycles, other vehicles (such as preceding vehicles and parked vehicles), traffic signals, traffic signs, and obstacles. The object information 212 indicates the position and the speed of the object relative to the vehicle 1. For example, the object can be identified and the relative position of the object can be calculated by analyzing image information obtained by the camera. Alternatively, the object can be identified and the relative position and the relative speed of the object can be acquired based on point group information obtained by the LIDAR sensor.

The vehicle state information 220 is information that indicates the state of the vehicle 1. The control device 100 acquires the vehicle state information 220 from the vehicle state sensor. The vehicle state information 220 may indicate the driving state (autonomous driving/manual driving) of the vehicle 1.

The vehicle position information 230 is information that indicates the present position of the vehicle 1. The control device 100 acquires the vehicle position information 230 from the result of detection by the position sensor. In addition, the control device 100 may acquire high-precision vehicle position information 230 through a well-known self-position estimation process (localization) in which the object information 212 and the map information MAP are used.

### 1-3-3. Vehicle Travel Control

The control device 100 executes "vehicle travel control" for controlling travel of the vehicle 1. The vehicle travel control includes steering control, acceleration control, and deceleration control. The control device 100 executes vehicle travel control by controlling the travel device 30. Specifically, the control device 100 executes steering control by controlling the steering device. In addition, the control device 100 executes acceleration control by controlling the drive device. In addition, the control device 100 executes deceleration control by controlling the braking device.

The control device 100 performs vehicle travel control based on the map information MAP. For example, the control device 100 determines (generates) a target trajectory TR for the vehicle 1 based on the lane position obtained from the map information MAP. The target trajectory TR includes a target position and a target speed. For example, the target trajectory TR is determined so as to extend along the lane center. In a different example, the target trajectory TR may be determined such that the margin from the lane boundary LB exceeds the first threshold Dth1. Then, the control device 100 performs vehicle travel control such that the vehicle 1 follows the target trajectory TR.

The vehicle travel control based on the target trajectory TR may be driving assist control such as autonomous driving control and lane tracing assist (LTA) control.

For example, the control device 100 performs autonomous driving control based on the driving environment information 200 and the map information MAP. In the autonomous driving assumed herein, a driver is not necessarily required to fully focus on driving (e.g. autonomous driving at so-called Level 3 or higher). More particularly, the control device 100 generates a travel plan for the vehicle 1 based on the driving environment information 200. The travel plan includes maintaining the present travel lane, making a lane change, making a right or left turn, avoiding an obstacle, etc. Further, the control device 100 generates a target trajectory TR that is necessary for the vehicle 1 to travel in accordance with the travel plan, based on the driving environment information 200 and the map information MAP. Then, the control device 100 performs vehicle travel control such that the vehicle 1 follows the target trajectory TR.

### 1-4. Example of Process Flow

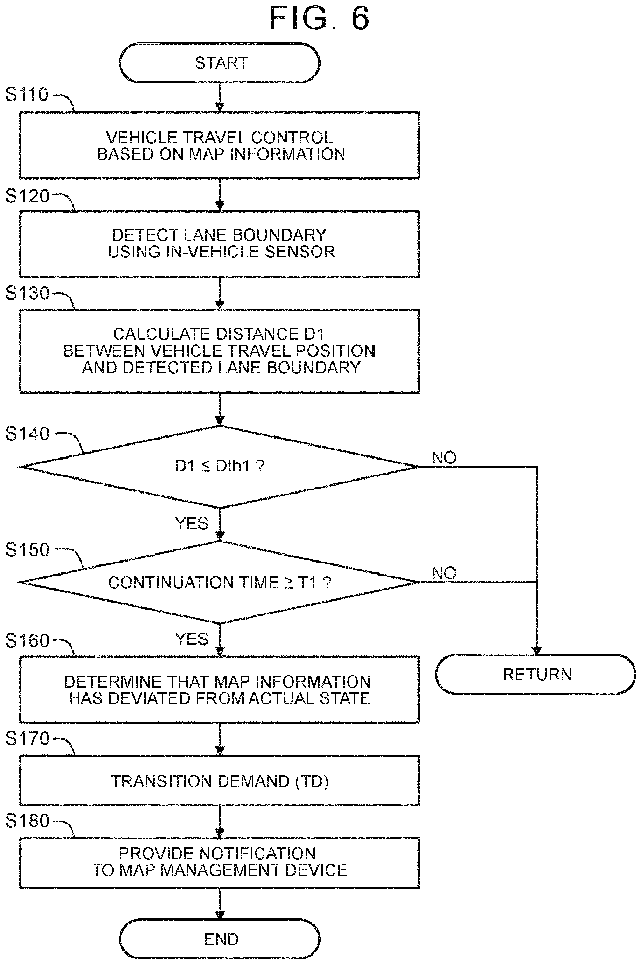

FIG. 6 is a flowchart illustrating an example of a process by the control device 100 of the vehicle control system 10 according to the present embodiment. Lane changes are not considered here.

In step S110, the control device 100 performs vehicle travel control based on the map information MAP. For example, the control device 100 determines a target trajectory TR based on the lane position obtained from the map information MAP. The control device 100 performs vehicle travel control such that the vehicle 1 follows the target trajectory TR.

In step S120, the control device 100 detects an actual lane boundary LBa around the vehicle 1 using the recognition sensor 21 mounted on the vehicle 1. That is, the control device 100 acquires the lane boundary information 211 discussed above.

In step S130, the control device 100 calculates a first distance D1. The first distance D1 is the distance between the travel position of the vehicle 1 and the actual lane boundary LBa detected by the recognition sensor 21. For example, the travel position of the vehicle 1 is a position on the target trajectory TR ahead of the vehicle 1. The first distance D1 in this case can be calculated from the position on the target trajectory TR and the lane boundary information 211 (relative position of the actual lane boundary LBa). In a different example, the travel position of the vehicle 1 is the present position of the vehicle 1. The first distance D1 in this case can be calculated from the lane boundary information 211 (relative position of the actual lane boundary LBa).

In step S140, the control device 100 compares the first distance D1 with the first threshold Dth1, and determines whether the first distance D1 is equal to or less than the first threshold Dth1. When the first distance D1 is equal to or less than the first threshold Dth1 (step S140: Yes), the process proceeds to step S150. When the first distance D1 is not equal to or less than the first threshold Dth1 (step S140: No), on the other hand, the process returns to step S110.

In step S150, the control device 100 determines whether a state in which the first distance D1 is equal to or less than the first threshold Dth1 has continued for the first time T1 or more. When a state in which the first distance D1 is equal to or less than the first threshold Dth1 has continued for the first time T1 or more (step S150: Yes), the process proceeds to step S160. Otherwise (step S150: No), the process returns to step S110.

In step S160, the control device 100 determines that the map information MAP has deviated from the actual state. In this manner, it is possible to detect that the map information MAP has deviated from the actual state.

When it is determined that the map information MAP has deviated from the actual state, that is, when deviation of the map information MAP from the actual state is detected, the control device 100 may further perform the following processes (steps S170 and S180).

Step S170 is performed when autonomous driving control is executed. Specifically, the control device 100 issues a "transition demand (TD)" that demands takeover of driving to the driver. The transition demand is notified the driver through the HMI 40. The driver takes over necessary driving from the vehicle control system 10 in response to the transition demand. Deviation of the map information MAP is preferably detected early in order to secure as much time as possible for takeover by the driver. To that end, the distance between the target trajectory TR and the actual lane boundary LBa is preferably used as the first distance D1. The control device 100 may reduce the vehicle speed while continuing autonomous driving control in a transition phase after the issuance of a transition demand. The control device 100 is not necessarily required to stop the vehicle 1.

In step S180, the control device 100 transmits a notification to the map management device 2 (see FIG. 1) that manages the map information MAP. The section for which it is determined that the map information MAP has deviated from the actual state will hereinafter be referred to as a "first section". The notification indicates at least the first section. The map management device 2 can add flag information indicating that the map information MAP for the first section has deviated from the actual state to the map information MAP. The notification may further include the position of the actual lane boundary LBa in the first section. In this case, the map management device 2 can update the map information MAP by incorporating the position of the actual lane boundary LBa in the first section in the map information MAP.

The map management device 2 may be included in the vehicle control system 10. In this case, the control device 100 manages the map information MAP, and updates the map information MAP as necessary.

### 1-5. Effects

In the present embodiment, as has been described above, the vehicle 1 is controlled based on the lane position obtained from the map information MAP. In addition, the actual lane boundary LBa around the vehicle 1 is detected using the recognition sensor 21 mounted on the vehicle 1. When a predetermined condition is met, further, it is determined that the map information MAP has deviated from the actual state. The predetermined condition is met when "a state in which the first distance D1 between the travel position of the vehicle 1 and the detected actual lane boundary LBa is equal to or less than the first threshold Dth1 continues for the first time T1 or more". Consequently, it is possible to appropriately detect that the map information MAP has deviated from the actual state without being affected by temporary behavior of the vehicle 1.

In addition, it is possible to "predict" deviation of the map information MAP when the distance between the target trajectory TR and the actual lane boundary LBa is used as the first distance D1. This is preferable from the viewpoint of securing the safety of vehicle travel.

In the present embodiment, in addition, a transition demand to demand takeover of driving is issued to the driver when it is determined that the map information MAP has deviated from the actual state during autonomous driving control. Consequently, the safety of vehicle travel is secured. The distance between the target trajectory TR and the actual lane boundary LBa is preferably used as the first distance D1 in order to secure as much time as possible for takeover by the driver.

In the present embodiment, further, a notification is transmitted to the map management device 2 when it is determined that the map information MAP for the first section has deviated from the actual state. Consequently, it is possible to register the first section (section with deviation) in the map information MAP, or update the map information MAP.

### 2. Second Embodiment

A second embodiment is a modification of the first embodiment. Descriptions overlapping with the first embodiment will be omitted as appropriate. The configuration of the vehicle control system 10 is the same as the first embodiment.

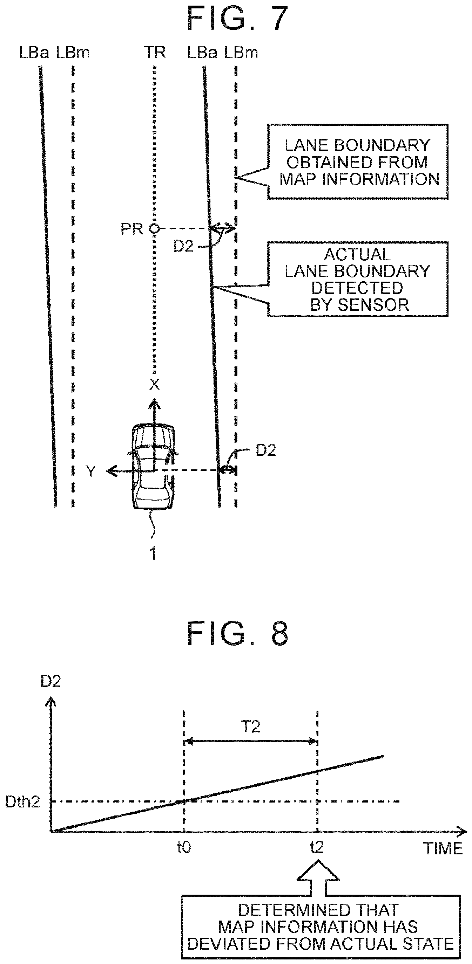

FIG. 7 is a conceptual diagram illustrating detection of deviation of the map information MAP from the actual state. A second distance D2 is the distance between the "lane boundary LBm obtained from the map information MAP at the travel position of the vehicle 1" and the "actual lane boundary LBa detected by the recognition sensor". For example, the travel position of the vehicle 1 is the present position of the vehicle 1. In a different example, the travel position of the vehicle 1 may be the position PR on the target trajectory TR ahead of the vehicle 1. The distance between the lane boundary LBm and the actual lane boundary LBa is a lateral distance along the lateral direction that is orthogonal to the direction of extension of the lane boundary LBm or the actual lane boundary LBa.

The vehicle control system 10 compares the second distance D2 with a second threshold Dth2, and determines whether the second distance D2 is equal to or more than the second threshold Dth2. Further, the vehicle control system 10 determines whether a state in which the second distance D2 is equal to or more than the second threshold Dth2 has continued for a second time T2 or more. When the state in which the second distance D2 is equal to or more than the second threshold Dth2 has continued for the second time T2 or more, the vehicle control system 10 determines that the map information MAP has deviated from the actual state. That is, the vehicle control system 10 detects deviation of the map information MAP from the actual state.

FIG. 8 is a timing chart illustrating an example of the detection of deviation of the map information MAP from the actual state. The horizontal axis represents the time. The vertical axis represents the second distance D2. The second distance D2 is increased as the time passes. At and after time t0, the second distance D2 is equal to or more than the second threshold Dth2 (e.g. 25 cm). At and after time t0, a state in which the second distance D2 is equal to or more than the second threshold Dth2 continues. At time t2, which is the second time T2 (e.g. 5 seconds) after time t0, the vehicle control system 10 determines that the map information MAP has deviated from the actual state. That is, the vehicle control system 10 detects deviation of the map information MAP from the actual state.

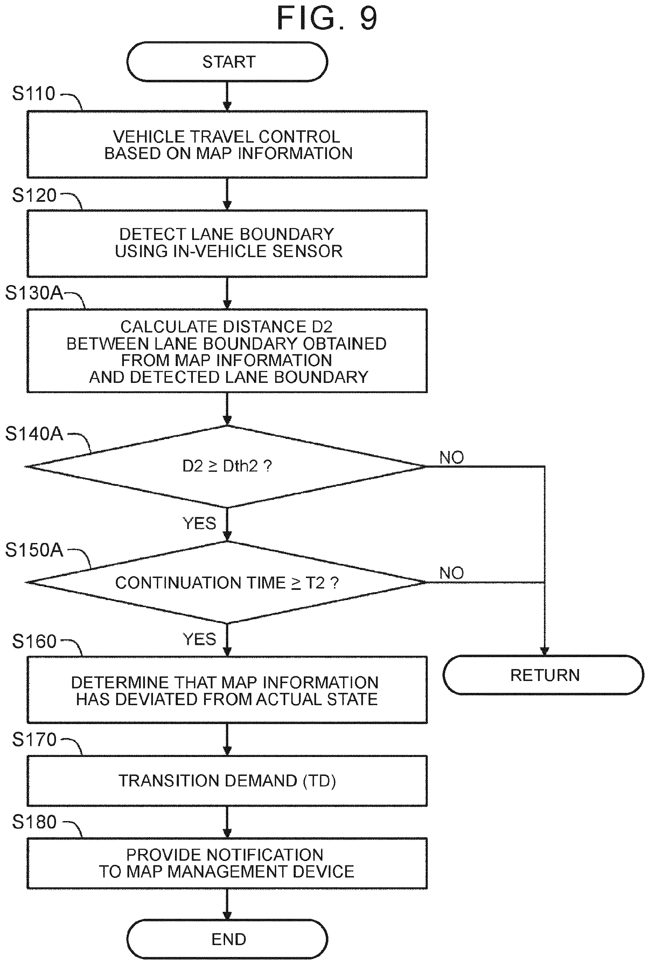

FIG. 9 is a flowchart illustrating an example of a process by the control device 100 of the vehicle control system 10. Steps S110, S120, S160, S170, and S180 are the same as those according to the first embodiment discussed above.

In step S130A, the control device 100 calculates a second distance D2. The second distance D2 is the distance between the lane boundary LBm obtained from the map information MAP at the travel position of the vehicle 1 and the actual lane boundary LBa detected by the recognition sensor 21. For example, the travel position of the vehicle 1 is a position on the target trajectory TR ahead of the vehicle 1. The second distance D2 in this case can be calculated from the position on the target trajectory TR, the map information MAP, and the lane boundary information 211 (relative position of the actual lane boundary LBa). In a different example, the travel position of the vehicle 1 is the present position of the vehicle 1. The second distance D2 in this case can be calculated from the map information MAP and the lane boundary information 211 (relative position of the actual lane boundary LBa).

In step S140A, the control device 100 compares the second distance D2 with the second threshold Dth2, and determines whether the second distance D2 is equal to or more than the second threshold Dth2. When the second distance D2 is equal to or more than the second threshold Dth2 (step S140A: Yes), the process proceeds to step S150A. On the other hand, when the second distance D2 is not equal to or more than the second threshold Dth2 (step S140A: No), the process returns to step S110.

In step S150A, the control device 100 determines whether a state in which the second distance D2 is equal to or more than the second threshold Dth2 has continued for the second time T2 or more. When a state in which the second distance D2 is equal to or more than the second threshold Dth2 has continued for the second time T2 or more (step S150A: Yes), the process proceeds to step S160. Otherwise (step S150A: No), the process returns to step S110.

As has been described above, the predetermined condition in the second embodiment is met when "a state in which the second distance D2 between the lane boundary LBm obtained from the map information MAP at the travel position of the vehicle 1 and the actual lane boundary LBa is equal to or more than the second threshold Dth2 continues for the second time T2 or more". Consequently, the same effects as the first embodiment discussed above can be obtained.

### 3. Third Embodiment

It is also possible to combine the first embodiment and the second embodiment. That is, the predetermined condition is met when "a state in which the first distance D1 between the travel position of the vehicle 1 and the actual lane boundary LBa is equal to or less than the first threshold Dth1 continues for the first time T1 or more", and/or when "a state in which the second distance D2 between the lane boundary LBm obtained from the map information MAP at the travel position of the vehicle 1 and the actual lane boundary LBa is equal to or more than the second threshold Dth2 continues for the second time T2 or more". Consequently, the effects discussed above can be obtained.

## Claims

1. A vehicle control method comprising:
controlling a vehicle (1) based on a lane position obtained from map information;
detecting a lane boundary around the vehicle (1) using a sensor (20) mounted on the vehicle (1); and
determining that the map information deviates from an actual state when a predetermined condition is met, the predetermined condition being met when a state in which a first distance is equal to or less than a first threshold continues for a first time or more or when a state in which a second distance is equal to or more than a second threshold continues for a second time or more, the first distance being a distance between a travel position of the vehicle (1) and the detected lane boundary, and the second distance being a distance between a lane boundary obtained from the map information at the travel position of the vehicle (1) and the detected lane boundary.

2. The vehicle control method according to claim 1, wherein:
the controlling the vehicle (1) includes determining a target trajectory for the vehicle (1) based on the lane position obtained from the map information, and controlling the vehicle (1) so as to follow the target trajectory; and
the travel position of the vehicle (1) is a position on the target trajectory or a present position of the vehicle (1).

3. The vehicle control method according to claim 2, wherein the travel position of the vehicle (1) is the position on the target trajectory.

4. The vehicle control method according to claim 2 or 3, wherein the determining the target trajectory based on the lane position obtained from the map information includes determining the target trajectory so as to extend along a lane center or such that a margin from the lane boundary obtained from the map information exceeds the first threshold.

5. The vehicle control method according to any one of claims 1 to 4, further comprising issuing a transition demand to demand takeover of driving to a driver of the vehicle (1) when it is determined that the map information deviates from the actual state during autonomous driving control.

6. The vehicle control method according to any one of claims 1 to 5, further comprising transmitting a notification that indicates at least a first section to a map management device that manages the map information when it is determined that the map information for the first section deviates from the actual state.

7. The vehicle control method according to claim 6, wherein the notification includes a position of the detected lane boundary in the first section.

8. A vehicle control system that controls a vehicle (1), the vehicle control system comprising one or more processors (110) configured to:
control the vehicle (1) based on a lane position obtained from map information;
detect a lane boundary around the vehicle (1) using a sensor (20) mounted on the vehicle (1); and
determine that the map information deviates from an actual state when a predetermined condition is met, the predetermined condition being met when a state in which a first distance is equal to or less than a first threshold continues for a first time or more or when a state in which a second distance is equal to or more than a second threshold continues for a second time or more, the first distance being a distance between a travel position of the vehicle (1) and the detected lane boundary, and the second distance being a distance between a lane boundary obtained from the map information at the travel position of the vehicle (1) and the detected lane boundary.

9. A map management method of managing map information that indicates a lane position to be used to control a vehicle (1), the map management method comprising:
detecting a lane boundary around the vehicle (1) using a sensor (20) mounted on the vehicle (1); and
determining that the map information deviates from an actual state when a predetermined condition is met, the predetermined condition being met when a state in which a first distance is equal to or less than a first threshold continues for a first time or more or when a state in which a second distance is equal to or more than a second threshold continues for a second time or more, the first distance being a distance between a travel position of the vehicle (1) and the detected lane boundary, and the second distance being a distance between a lane boundary obtained from the map information at the travel position of the vehicle (1) and the detected lane boundary.
